(19) Europäisches Patentamt
European Patent Office
Office européen des brevets

(11) Veröffentlichungsnummer : **0 110 236**
**B1**

(12) **EUROPÄISCHE PATENTSCHRIFT**

(45) Veröffentlichungstag der Patentschrift : **30.12.86**

(51) Int. Cl.⁴ : **A 01 N 43/78** // (A01N43/78, 43:78, 43:40)

(21) Anmeldenummer : **83111429.3**

(22) Anmeldetag : **15.11.83**

# (54) Herbizide Mittel.

(30) Priorität : **18.11.82 DE 3242487**

(43) Veröffentlichungstag der Anmeldung : **13.06.84 Patentblatt 84/24**

(45) Bekanntmachung des Hinweises auf die Patenterteilung : **30.12.86 Patentblatt 86/52**

(84) Benannte Vertragsstaaten : **AT BE DE FR GB NL SE**

(56) Entgegenhaltungen :
**EP-A- 0 000 483**
**FR-A- 2 285 071**
**RESEARCH DISCLOSURE, nr. 219, Juli 1982, Seite 253, Nr. 21937, Havant Hampshire, GB., "Herbicidal mixtures"**
**RESEARCH DISCLOSURE, nr. 202, Februar 1981, Seite 72, Nr. 20220, Havant Hampshire, GB., "Herbicidal mixtures"**

(73) Patentinhaber : **HOECHST AKTIENGESELLSCHAFT**
**Postfach 80 03 20**
**D-6230 Frankfurt am Main 80 (DE)**

(72) Erfinder : **Schumacher, Hans, Dr.**
**Claudiusstrasse 4**
**D-6093 Flörsheim am Main (DE)**
Erfinder : **Heinrich, Rudolf, Dr.**
**Taunusstrasse 19**
**D-6233 Kelkheim (Taunus) (DE)**
Erfinder : **Marks, Hans-Günter**
**Spindelstrasse 9**
**D-6234 Hattersheim am Main (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 110 236 B1

**Beschreibung**

Gegenstand der vorliegenden Erfindung sind herbizide Mittel, die gekennzeichnet sind durch einen Gehalt an einer Verbindung der Formel I

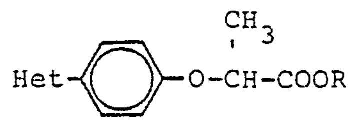

(I)

worin

Het =

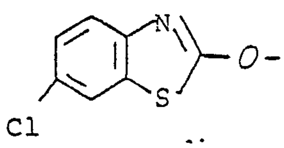

oder

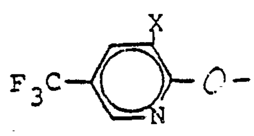

mit X = H oder Cl,

R = Wasserstoff, ($C_1$-$C_4$)-Alkyl oder ein Kationäquivalent bedeutet, in Kombination mit einer Verbindung der Formel II,

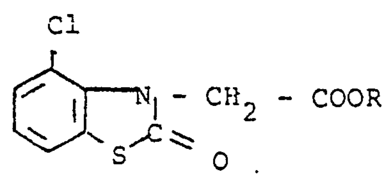

(II)

worin R die obengenannte Bedeutung besitzt, und der Verbindung der Formel III

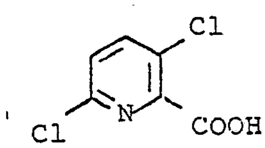

(III)

Als Kationenäquivalente für die Reste R der Formeln I und II kommen Metallkationen wie beispielsweise Alkali- und Erdalkali-Kationen oder gegebenenfalls alkylsubstituierte Ammoniumkationen in Betracht.

R bedeutet in Formel II bevorzugt Ethyl.

Die Verbindungen der Formel I besitzen ein Asymmetriezentrum und können daher als reine Enantiomere oder als Enantiomerengemische vorliegen.

Unter den Verbindungen der Formel I sind für die vorliegende Erfindung von besonderem Interesse :

α-[4-(6-Chlor-benzthiazol-2-yloxy)-phenoxy]-propionsäure-ethyl ester (Ia)

α-[4-(3-Chlor-5-trifluormethyl-pyrid-2-yloxy)-phenoxy]-propionsäure-methylester (Ib)

α-[4-(5-Trifluormethyl-pyrid-2-yloxy)-phenoxy]-propionsäure-butylester (Ic).

Die Verbindungen der Formel II und III werden beschrieben in « The Pesticide Manual » des British Crop Protection Council, 6. Auflage 1979, S. 28 und 175.

Die Verbindungen der Formel I sind besonders dafür geeignet, grasartige Pflanzen wie z. B. Avena sp., Alopecurus myosuroides, Hordeum sp., Lolium sp. und Triticum sp. zu bekämpfen.

Die Verbindungen der Formel II sind wirksam gegen dikotyle Pflanzen, z. B. Stellaria media und Galium aparine ; die Verbindung der Formel III wirkt besonders gegen Leguminosen und andere dikotyle Pflanzen wie z. B. Polygonum sp. und Matricaria sp.

Die Kombination der Verbindung der Formel II mit R = Ethyl [4-Chlor-2-oxo-benzthiazolin-3-yl-essigsäureethylester (IIa)] mit der Verbindung der Formel III (3,6-Dichlorpicolinsäure (III) ist publiziert in

Proc. 13th British Weed Control Conference, Vol. 2, 517-524 und FR-A' 2 285 071. In der französischen Patentanmeldung werden auch Kombinationen von II, III und Phenoxyessigsäure- oder -propionsäurederivaten genannt.

Bei Versuchen, die drei Wirkstofftypen I, II und III zur Erweiterung des Wirkungsspektrums zu kombinieren, zeigte sich überraschenderweise eine auffallende synergistische Wirkung.

Die erfindungsgemäßen Wirkstoffkombinationen können zur Bekämpfung unerwünschter Pflanzenarten wie z. B. Avena sp., Alopecurus myosuroides, Hordeum sp., Lolium sp., Triticum sp., Stellaria media, Matricaria sp. in Nutzpflanzenkulturen, insbesondere in Raps, eingesetzt werden.

Die Gewichtsverhältnisse der Komponenten I : II : III können innerhalb weiter Grenzen schwanken. Sie können zwischen 3 : (3 : 1) bis 20 : (9 : 1) variieren und liegen insbesondere im Bereich zwischen 4 : (5 : 1) bis 8 : (7 : 1).

Die erfindungsgemäßen Kombinationen können entweder als Tankmischungen, bei denen die einzelnen Wirkstoffkomponenten erst unmittelbar vor der Applikation miteinander vermischt werden, oder als Fertigformulierungen zur Anwendung gebracht werden. Als Fertigmischungen können sie z. B. in Form von benetzbaren Pulvern, emulgierbaren Konzentraten, Lösungen, Dispersionen, Stäubemitteln oder Granulaten formuliert sein und enthalten dann gegebenenfalls die üblichen Formulierungshilfsmittel, wie Netz-, Haft-, Emulgier-, Dispergiermittel, feste oder flüssige Inertstoffe, Mahlhilfsmittel und Lösungsmittel.

Benetzbare Pulver sind in Wasser gleichmäßig dispergierbare Präparate, die neben dem Wirkstoff außer gegebenenfalls Verdünnungs- bzw. Inertstoffen noch Netzmittel, z. B. polyoxethylierte Alkylphenole, polyoxethylierte Oleyl- oder Stearylamine, Alkyl- oder Alkylphenylsulfonate und Dispergiermittel, z. B. ligninsulfonsaures Natrium, 2,2'-dinaphthyl-methan-6,6'-disulfonsaures Natrium, dibutylnaphthalinsulfonsaures Natrium oder auch oleylmethyltaurinsaures Natrium enthalten können.

Emulgierbare Konzentrate können beispielsweise durch Auflösen des Wirkstoffes in einem organischen Lösungsmittel, z. B. Butanol, Cyclohexanon, Dimethylformamid, Xylol, Isophoron oder auch höhersiedenden Aromaten unter Zusatz von einem oder mehreren Emulgatoren hergestellt werden. Als Emulgatoren können beispielsweise verwendet werden : Alkylarylsulfonsaure Calciumsalze, Fettsäurepolyglykolester, Alkylarylpolyglykolether, Fettalkoholpolyglykolether, polyoxethylierte Oleyl- oder Stearylamine, Propylenoxid-Ethylenoxid-Kondensationsprodukte, Alkylpolyether, Sorbitan-Fettsäureester, Alkylaryl-Propylenoxid-Ethylenoxid-Kondensationsprodukte u. a.

Stäubemittel erhält man durch Vermahlen des Wirkstoffes mit fein verteilten, festen Stoffen, z. B. Talkum, natürlichen Tonen, wie Kaolin, Bentonit, Pyrophillit oder Diatomeenerde.

Granulate können entweder durch Verdüsen einer Lösung des Wirkstoffes auf adsorptionsfähiges, granuliertes Inertmaterial hergestellt werden oder durch Aufbringen von Wirkstoffkonzentraten mittels eines Bindemittels, z. B. Polyvinylalkohol, polacrylsaurem Natrium, Methylhydroxyethylcellulose oder auch Mineralölen auf die Oberfläche von Trägerstoffen, wie Sand, Kaolinite oder von granuliertem Inertmaterial, Auch können geeignete Wirkstofformulierungen in der für die Herstellung von Düngemittelgranulaten üblichen Weise — gewünschtenfalls in Mischung mit Düngemitteln — hergestellt werden.

Die erfindungsgemäßen synergistischen Wirkstoffmischungen aus Verbindungen der Formeln I, II und III können in Form üblicher Zubereitungen, insbesondere als benetzbare Pulver, emulgierbare Konzentrate, Lösungen, Dispersionen, Stäubemittel oder Granulate formuliert werden. Der Gesamtwirkstoffgehalt der marktfähigen Formulierungen beträgt dann ca. 2 bis 95 Gew.-%, vorzugsweise 10 bis 70 Gew.-%, wobei der Rest zu 100 Gew.-% aus üblichen Formulierungshilfsmitteln, wie Haft-, Netz-, Emulgier-, Dispergier-, Füll-, Lösungsmitteln und Trägerstoffen besteht.

In benetzbaren Pulvern variiert die Gesamt-Wirkstoffkonzentration im Bereich von etwa 10 bis 70 Gew.-%, wobei die Konzentrationen der Einzelkomponenten I bzw. II und III je nach dem Verhältnis der Komponenten I, II und III zwischen 3 und 50 Gew.-% betragen können. Der Rest zu 100 Gew.-% besteht aus üblichen Formulierungshilfsmitteln. Bei emulgierbaren Konzentraten liegt die Gesamtwirkstoffkonzentration im Bereich von etwa 10 bis 70 Gew.-%, wobei je nach dem Verhältnis der Komponenten I, II und III die Konzentration der Komponente I zwischen 3 und 30 Gew.-%, die Konzentration der Komponente II zwischen 3 und 40 und die Komponente III zwischen 2 und 20 Gew.-% variieren kann. Bei Granulaten beträgt sie etwa 2 bis 10 Gew.-%. Staubförmige Formulierungen enthalten etwa 5 bis 20 Gew.-% an Wirkstoffgemisch.

Gegenstand der Erfindung sind daher auch herbizide Mittel mit einem Gehalt von 2 bis 95 Gew.-%, vorzugsweise 10 bis 70 Gew.-% an einer Wirkstoffkombination aus Verbindungen der Formeln I, II und III, wobei der Rest zu 100 Gew.% aus üblichen Formulierungshilfsmitteln besteht.

Zur Anwendung werden die genannten Konzentrate gegebenenfalls in üblicher Weise verdünnt, z. B. benetzbare Pulver, emulgierbare Konzentrate und Dispersionen mittels Wasser. Straubförmige und granulierte Zubereitungen sowie versprühbare Lösungen werden vor der Anwendung im allgemeinen nicht mehr mit weiteren inerten Stoffen verdünnt. Mit den äußeren Bedingungen, wie Temperatur, Feuchtigkeit u. a. variiert auch die erforderliche Aufwandmenge an den erfindungsgemäßen Mitteln. Sie kann sich innerhalb weiter Grenzen bewegen und beträgt im allgemeinen zwischen 0,2 und 10 kg/ha Wirkstoffkombination, vorzugsweise 0,3-1,5 kg/ha.

Die Erfindung wird durch die nachfolgenden Beispiele erläutert.

Formulierungsbeispiele

Beispiel 1

Ein emulgierbares Konzentrat wird erhalten aus :

12,7 Gew.-% Äthyl-2-(4-(6-chlor-2-benzthiazolyloxy-) phenoxy)-propanoat
16,9 Gew.-% 4-Chlor-2-oxo-benzthiazolin-3-yl-essigsäureäthylester
2,5 Gew.-% 3,6-Dichlorpicolinsäure
12,0 Gew.-% äthoxylierter Triisodecylalkohol
30,9 Gew.-% Xylol
10,0 Gew.-% Cyclohexanon
9,5 Gew.-% Fettsäure-polyglykolester
5,5 Gew.-% Ca-Salz einer Alkylarylsulfonsäure

Zur Herstellung des emulgierbaren Konzentrates werden die 3 Wirkstoffe in den angegebenen Lösungsmittel-Mengen unter leichtem Erwärmen gelöst, danach unter Rühren die Emulgatoren und nach weiterem Rühren langsam das Netzmittel zugesetzt. Die entstehende weitgehend klare Lösung wird filtriert und anschließend auf ihre Emulsionsqualität untersucht.

Beispiel 2

10,2 Gew.-% Äthyl-2-(4-(6-chlor-2-benzthiazolyloxy)-phenoxy)-propanoat
16,9 Gew.-% 4-Chlor-2-oxo-benzthiazolin-3-yl-essigsäureäthylester
5,0 Gew.-% 3,6-Dichlorpicolinsäure
12,0 Gew.-% äthoxyliertes. Nonylphenol
35,0 Gew.-% Xylol
5,0 Gew.-%, Cyclohexanon
5,0 Gew.-% Ca-Salz einer Alkylarylsulfonsäure
6,0 Gew.-% Fettsäure-polyglykolester
4,9 Gew.-% Alkylarylpolyglykoläther

Die Herstellung des emulgierbaren Konzentrates erfolgt wie unter Beispiel 1 angegeben.

Beispiel 3

12,7 Gew.-% Äthyl-2-(4-(6-chlor-2-benzthiazolyloxy)-phenoxy)-propanoat
13,4 Gew.-% 4-Chlor-2-oxo-benzthiazolin-3-yl-essigsäureäthylester
6,0 Gew.-% 3,6-Dichlorpicolinsäure
12,0 Gew.-% äthoxylierter Tridecylalkohol
5,0 Gew.-% N-Methylpyrrolidon
30,0 Gew.-% Xylol
5,0 Gew.-% Cyclohexanon
6,0 Gew.-% Ca-Salz einer Alkylarylsulfonsäure
5,5 Gew.-% Fettalkoholpolyglykoläther
4,4 Gew.-% Alkylarylpolyglykoläther

Die Herstellung des Emulsionskonzentrates erfolgt die unter Beispiel 1 angegeben.

Beispiel 4

Ein in Wasser dispergierbares Spritzpulver wird erhalten aus :

12,7 Gew.-% Äthyl-2-(4-(6-chlor-2-benzthiazolyloxy-)phenoxy)-propanoat
16,9 Gew.-% 4-Chlor-2-oxo-benzthiazolin-3-yl-essigsäureäthylester
2,5 Gew.-% 3,6-Dichlorpicolinsäure
12,0 Gew.-% äthoxylierter Triisodecylalkohol
25,0 Gew.-% synthetischer Kieselsäure
15,0 Gew.-% basischem Aluminiumsilikat
9,0 Gew.-% ligninsulfonsaures Kalium
6,5 Gew.-% oleylmethyltaurinsaurem Natrium

Das flüssige Netzmittel wird an der gleichen Gewichtsmenge synthetischer Kieselsäure in einem Trommelmischer absorbiert, anschließend die übrigen Formulierungsbestandteile eingesetzt und gut gemischt. Danach wird auf einer Stiftmühle einmal bei 3 000 Upm und dann bei 12 000 Upm gemahlen.

## Biologische Beispiele

In den folgenden biologischen Beispielen wird bei den geprüften Wirkstoffkombinationen unterschieden zwischen dem aus den Wirkungen der Einzelanwendung der Wirkstoffkomponenten errechneten additiven Wirkungsgrad und dem experimentell gefundenen Wirkungsgrad der Wirkstoffkombinationen. Dabei wurden die bekannten Wirkstoffkombinationen. Dabei wurden die bekannten Wirkstoffkombinationen der Verbindungen II und III hinsichtlich ihrer Wirkungen als ein Produkt betrachtet und mit der Verbindung I kombiniert.

Die Errechnung des additiven Wirkungsgrades erfolgt nach der Formel von S. R. Colby (vgl. Calculating synergistic and antagonistic responses of herbicide combinations, Weeds, *15*, 1967 S. 20-22).

Diese Formel lautet :

$$E = X + Y - X \cdot Y/100$$

wobei

X = % Schädigung durch Herbizid A bei X kg/ha Aufwandmenge

Y = % Schädigung durch Herbizid B bei Y kg/ha Aufwandmenge

E = die erwartete Schädigung der Herbizide A + B bei X + Y kg/ha Aufwandmenge bedeutet.

Ist die tatsächliche Schädigung größer als berechnet, so ist die Wirkung der Kombination mehr als additiv, d. h. es liegt ein synergistischer Effekt vor.

Die Testpflanzen Hordeum vulgare, Alopecurus myosuroides, Avena fatua, Matricaria chamomilla, Galium aparine und Brassica napus wurden in Töpfen angezogen und im 2-3 Blattstadium mit den Wirkstoffverbindungen, die jeweils in 300 l/ha verdünnt wurden, besprüht. Die Schädigung (Wirkungsgrad) wurde 3 Wochen nach der Behandlung festgestellt. Als Bezugsbasis diente jeweils eine unbehandelte Kontrolle

Es zeigte sich dabei erwartungsgemäß, daß die Verbindungen der Formel I keine Wirkungen auf dikotyle Arten (Matricaria chamomilla, Galium aparine, Brassica napus) haben und die Kombinationen aus Verbindungen der Formeln II und III nur in den höheren Dosierungen eine geringe Wirkung auf monokotylen Arten (Hordeum vulgare, Alopecurus myosuroides, Avena fatua) aufweisen.

In der Kombination der Wirkstoffverbindungen der Formeln I + II + III trat überraschenderweise eine über den additiven Effekt hinausgehende Wirkungssteigerung ein.

In der folgenden Tabelle sind die experimentell gefundenen Wirkungsgrade aufgelistet. Die in () gesetzten Zahlen stellen die nach der Formel von Colby errechneten zu erwartenden Werte dar, wobei für Y die beobachtete Summe der Wirkungen der Verbindungen der Formeln II und III eingesetzt wurde.

(Siehe Tabellen Seite 6 ff.)

Tabelle

Bekämpfung von mono- und dikotylen Unkräutern in Raps (Brassica napus)

| | | Wirkung (Schädigung in %) auf: | | | | | |
|---|---|---|---|---|---|---|---|
| Verb./Kombi-nationen | Dosis g AS/ha | Hordeum vulgare | Alopecurus myosuroides | Avena fatua | Matricaria chamomilla | Galium aparine | Brassica napus |
| I a | 24 | 67 | 68 | 63 | 0 | 0 | 0 |
| | 48 | 73 | 76 | 75 | 0 | 0 | 0 |
| | 72 | 82 | 86 | 84 | 0 | 0 | 0 |
| | 96 | 88 | 92 | 91 | 0 | 0 | 0 |
| | 144 | 100 | 100 | 100 | 0 | 0 | 0 |
| I b | 12 | 45 | 55 | 50 | 0 | 0 | 0 |
| | 24 | 70 | 78 | 73 | 0 | 0 | 0 |
| | 36 | 79 | 86 | 82 | 0 | 0 | 0 |
| | 48 | 86 | 93 | 89 | 0 | 0 | 0 |
| | 60 | 92 | 100 | 95 | 0 | 0 | 0 |
| I c | 24 | 50 | 58 | 55 | 0 | 0 | 0 |
| | 48 | 62 | 70 | 68 | 0 | 0 | 0 |
| | 72 | 76 | 79 | 75 | 0 | 0 | 0 |
| | 96 | 84 | 87 | 86 | 0 | 0 | 0 |
| Kombination II a + III | 30 + 5 | 0 | 0 | 0 | 52 | 40 | 0 |
| | 60 + 10 | 0 | 0 | 0 | 60 | 50 | 0 |
| | 90 + 15 | 5 | 7 | 9 | 68 | 64 | 0 |
| | 120 + 20 | 8 | 11 | 10 | 75 | 70 | 0 |
| | 60 + 15 | 0 | 0 | 0 | 66 | 53 | 0 |
| | 100 + 25 | 6 | 8 | 7 | 82 | 67 | 0 |

AS = Aktivsubstanz
Verbindungen Ia, Ib, Ic, IIa und III s. S.2

**Tabelle (Fortsetzung)**

| Kombi-nationen | Dosis g AS/ha | Wirkung (Schädigung in %) auf: Hordeum vulgare | Alopecurus myosuroides | Avena fatua | Matricaria chamomilla | Galium aparine | Brassica napus |
|---|---|---|---|---|---|---|---|
| I a + II a + III | 24 + 30 + 5 | 77 | 78 | 75 | 70 | 50 | 0 |
| | 48 + 60 + 10 | 80 | 84 | 85 | 78 | 65 | 0 |
| | 48 + 90 + 15 | 86 (75) | 89 (78) | 88 (78) | 84 | 78 | 0 |
| | 72 + 90 + 15 | 90 (83) | 95 (87) | 92 (86) | 86 | 81 | 0 |
| | 72 + 120 + 20 | 96 (84) | 98 (88) | 94 (86) | 92 | 87 | 0 |
| | 96 + 120 + 20 | 100 (89) | 100 (93) | 100 (92) | 95 | 89 | 0 |
| | 96 + 60 + 15 | 100 | 100 | 100 | 83 | 68 | 0 |
| | 96 + 100 + 25 | 100 (89) | 100 (93) | 100 (92) | 100 | 83 | 0 |
| I b + II a + III | 12 + 30 + 5 | 53 | 60 | 58 | 68 | 46 | 0 |
| | 24 + 60 + 10 | 75 | 82 | 77 | 76 | 62 | 0 |
| | 24 + 90 + 15 | 82 (72) | 88 (80) | 84 (76) | 85 | 73 | 0 |
| | 36 + 90 + 15 | 88 (81) | 94 (87) | 93 (84) | 86 | 75 | 0 |
| | 36 + 120 + 20 | 95 (80) | 99 (88) | 96 (84) | 92 | 84 | 0 |
| | 48 + 120 + 20 | 100 (88) | 100 (94) | 100 (91) | 95 | 86 | 0 |
| | 48 + 60 + 15 | 100 | 100 | 100 | 80 | 67 | 0 |
| | 48 + 100 + 25 | 100 (87) | 100 (94) | 100 (90) | 100 | 82 | 0 |
| I c + II a + III | 24 + 30 + 5 | 58 | 67 | 62 | 70 | 48 | 0 |
| | 48 + 60 + 10 | 70 | 75 | 73 | 75 | 60 | 0 |
| | 48 + 90 + 15 | 73 (64) | 82 (73) | 80 (71) | 83 | 75 | 0 |
| | 72 + 90 + 15 | 85 (78) | 88 (81) | 87 (78) | 85 | 79 | 0 |
| | 72 + 120 + 20 | 89 (78) | 92 (82) | 90 (78) | 90 | 86 | 0 |
| | 96 + 120 + 20 | 100 (86) | 100 (89) | 100 (88) | 93 | 88 | 0 |
| | 96 + 60 + 15 | 95 | 100 | 100 | 82 | 64 | 0 |
| | 96 + 100 + 25 | 100 (85) | 100 (89) | 100 (87) | 100 | 80 | 0 |

**Patentansprüche**

1. Herbizide Mittel, gekennzeichnet durch einen Gehalt an einer Verbindung der Formel I

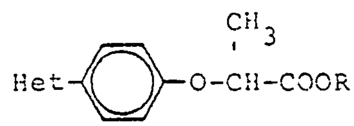

(I)

worin

Het =

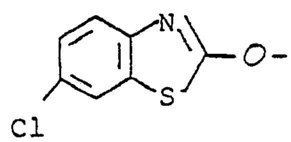

oder

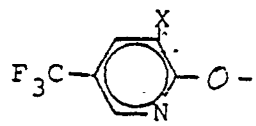

mit X = H oder Cl,

R = Wasserstoff, ($C_1$-$C_4$)-Alkyl oder ein Kationäquivalent bedeutet, in Kombination mit einer Verbindung der Formel II,

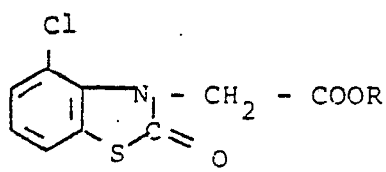

(II)

worin R die obengenannte Bedeutung besitzt, und der Verbindung der Formel III

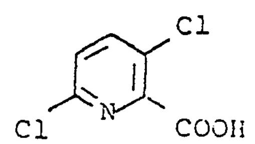

(III)

2. Herbizide Mittel gemäß Anspruch 1, dadurch gekennzeichnet, daß als Verbindungen der Formel I die Verbindungen

α-[4-(6-Chlor-benzthiazol-2-yloxy)-phenoxy]-propionsäure-ethyl ester,

α-[4-(3-Chlor-5-trifluormethyl-pyrid-2-yloxy)-phenoxy]-propionsäure-methylester oder

α-[4-(5-Trifluormethyl-pyrid-2-yloxy)-phenoxy]-propionsäure-butylester eingesetzt werden.

3. Herbizide Mittel gemäß Anspruch 1, dadurch gekennzeichnet, daß R in Formel II Ethyl bedeutet.

4. Herbizide Mittel gemäß Ansprüchen 1, 2 und 3, dadurch gekennzeichnet, daß das Mischungsverhältnis der Komponenten der Formeln I : II : III im Bereich zwischen 3 : (3 : 1) bis 20 : (9 : 1) liegt.

5. Herbizide Mittel gemäß Ansprüchen 1, 2, 3 und 4, dadurch gekennzeichnet, daß das Mischungsverhältnis der Komponenten der Formeln I : II : III im Bereich zwischen 4 : (5 : 1) bis 8 : (7 : 1) liegt.

6. Verwendung der Mittel gemäß Ansprüchen 1 bis 5 zur Bekämpfung von unerwünschtem Pflanzenwuchs in Nutzpflanzenkulturen.

7. Verfahren zur Bekämpfung von Schadpflanzen in Nutzpflanzenkulturen, dadurch gekennzeichnet, daß man auf diese bzw. die Anbauflächen ein Mittel gemäß Ansprüchen 1 bis 5 aufbringt.

**Claims**

1. A herbicidal agent which contains a compound of the formula I

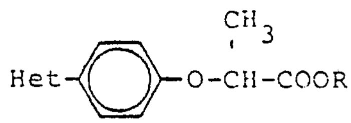

(I)

in which

Het denotes

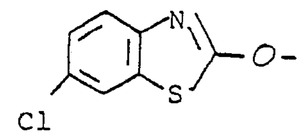

or

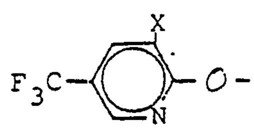

in which X is H or Cl, and

R denotes hydrogen, $(C_1-C_4)$-alkyl or a cation equivalent, in combination with a compound of the formula II

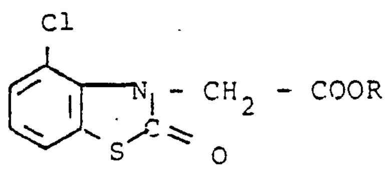

(II)

in which R has the abovementioned meaning, and with the compound of the formula III

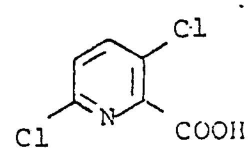

(III)

2. A herbicidal agent as claimed in claim 1, wherein the compound ethyl α-[4-(6-chlorobenzthiazol-2-yloxy)-phenoxy]-propionate, methyl α-[4-(3-chloro-5-trifluoromethyl-pyrid-2-yloxy)-phenoxy]-propionate or butyl α-[4-(5-trifluoromethyl-pyrid-2-yloxy)-phenoxy]-propionate is employed as the compound of the formula I.

3. A herbicidal agent as claimed in claim 1, wherein R in formula II denotes ethyl.

4. A herbicidal agent as claimed in any of claims 1, 2 and 3, wherein the mixing ratio of the components of the formulae I : II : III is within the range from 3 : (3 : 1) to 20 : (9 : 1).

5. A herbicidal agent as claimed in any of claims 1, 2, 3 and 4, wherein the mixing ratio of the components of the formulae I : II : III is within the range from 4 : (5 : 1) to 8 : (7 : 1).

6. The use of an agent as claimed in any of claims 1 to 5 for combating undesirable plant growth in crops of useful plants.

7. A process for combating weeds in crops of useful plants, which comprises applying an agent as claimed in any of claims 1 to 5 to these plants or to the cultivated areas.

**Revendications**

1. Produits herbicides caractérisés en ce qu'ils contiennent un composé répondant à la formule I :

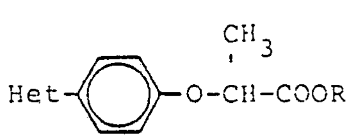

(I)

dans laquelle

Het représente un radical :

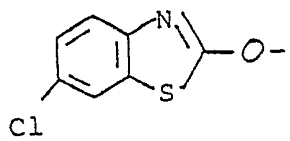

ou un radical répondant à la formule :

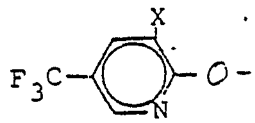

dans laquelle X représente H ou Cl, et

R représente l'hydrogène, un alkyle en $C_1$ à $C_4$ ou un équivalent de cation, associé à un composé répondant à la formule II :

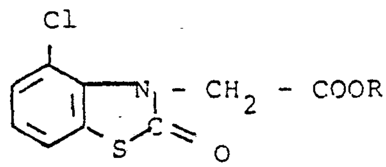

(II)

dans laquelle R a la signification qui a été indiquée ci-dessus, et au composé de formule III :

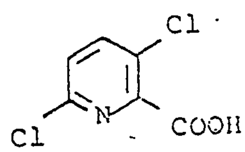

(III)

2. Produits herbicides selon la revendication 1 caractérisés en ce qu'ils contiennent, comme composé de formule I :

le ((chloro-6 benzothiazolyl-2 oxy)-4 phénoxy)-2 propionate d'éthyle,

le ((chloro-3 trifluorométhyl-5 pyridyl-2 oxy)-4 phénoxy)-2 propionate de méthyle ou

le ((trifluorométhyl-5 pyridyl-2 oxy)-4 phénoxy)-2 propionate de butyle.

3. Produits herbicides selon la revendication 1 caractérisés en ce que R, dans la formule II, représente un radical éthyle.

4. Produits herbicides selon l'une quelconque des revendications 1, 2 et 3, caractérisés en ce que, dans le mélange, le rapport des composantes (I) : (II) : (III) est situé dans l'intervalle allant de 3 : (3 : 1) à 20 : (9 : 1).

5. Produits herbicides selon l'une quelconque des revendications 1, 2, 3 et 4, caractérisés en ce que, dans le mélange, le rapport des composantes (I) : (II) : (III) est situé dans l'intervalle allant de 4 : (5 : 1) à 8 : (7 : 1).

6. Application des produits selon l'une quelconque des revendications 1 à 5 à la lutte contre des plantes gênantes dans des cultures de plantes utiles.

7. Procédé pour combattre des plantes nuisibles dans des cultures de plantes utiles, procédé caractérisé en ce qu'on applique sur ces plantes, ou sur les surfaces de culture, un produit selon l'une quelconque des revendications 1 à 5.